# EUROPEAN PATENT APPLICATION

(11) **EP 2 012 462 A1**
(43) Date of publication of application: **07.01.2009**
(21) Application number: 07785414.9
(22) Date of filing: 06.08.2007
(51) Int. Cl.: H04L 12/18

(54) **SYSTEM, APPARATUS AND METHOD FOR MAINTAINING PRESENCE INFORMATION OF PUBLIC GROUP MEMBER**

(30) Priority: 16.08.2006 CN 200610111405
(71) Applicant: Huawei Technologies Co., Ltd., Longgang District, Shenzhen Guangdong 518129 (CN)
(72) Inventor: HE, Qin, Shenzhen, Guangdong 518129 (CN); JI, Fang, Shenzhen, Guangdong 518129 (CN); SHA, Jin, Shenzhen, Guangdong 518129 (CN); WANG, Haoyu, Shenzhen, Guangdong 518129 (CN)
(74) Representative: Körber, Martin Hans
(86) International application number: PCT/CN2007/070420
(87) International publication number: WO 2008/019613

(57) **Abstract**

A system for maintaining presence information of public group members is provided, which includes a presence server and a group list management server, and further includes a presence group server, connected to the presence server and the group list management server and adapted to obtain information of the public group members from the group list management server according to a received subscription request for the presence information of the public group members, subscribe for the presence information of the public group members from the presence server, and save the presence information of the public group members. A presence group server and a method for maintaining presence information of public group members are also provided, which can reduce the stress on a resource list server and a presence server in terms of performance and resource occupation.

## Description

This application claims priority to Chinese patent application no. 200610111405.8, entitled "System and method for maintaining presence information of public group member" and filed with the Chinese Patent Office on August 16, 2006, which is hereby incorporated by reference in its entirety.

### Field of the Invention

The present invention relates to an interaction technique between terminals and a server, in particular, to a system, apparatus, and method for maintaining presence information of public group members.

### Background of the Invention

A presence server is an enabling component of an IP multimedia subsystem (IMS) service, for maintaining willingness information and capability information of a presentity, and providing the information to any legal watcher.

A resource list server (RLS) is called a presence list server when being applied in presence service. As an expansion server for the presence server, the resource list server maintains rls-services documents made by watchers. By using such a document, the watcher may write entry, private group, and public group into the document, so that the watcher can subscribe for the information of all the presentities via the resource list server merely by means of initiating one subscription request to the resource list server.

Specifically, a watcher user sets up a resource list, and adds an entry, a private group, and a public group into the resource list. The user equipment initiates a subscription to the resource list server, and then the resource list server, a group list management server (GLMS), and the presence server are interacted with each other to obtain presence information of all the members listed in the resource list, and then send the presence information to the user equipment, so that the user equipment does not need to subscribe one by one.

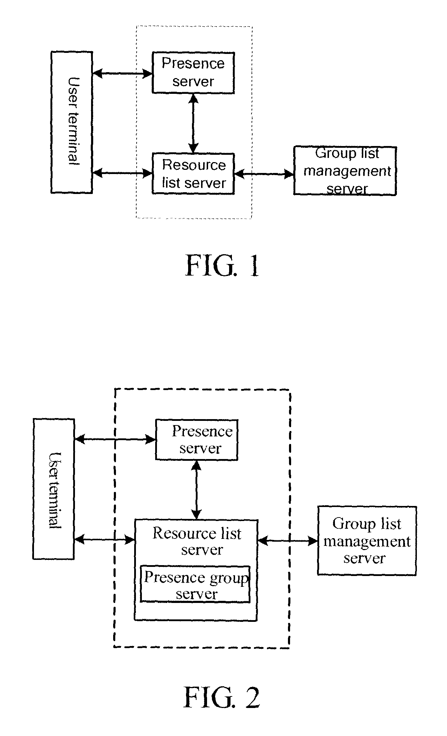

FIG. 1 is a structure diagram of a group presence service in the prior art. If the watcher adds an entry in his rls-services document, the resource list server directly initiates a subscription for the presentity to the presence server; if the watcher adds a private group or a public group in the rls-services document, the resource list server is required to subscribe for information of members of the private group or the public group from the group list management server that maintains the private group and the public group, and then initiate a plurality of subscription requests to the presence server after obtaining the members, so as to complete the subscription for all the members.

As for the subscription for the private group, as the private group is made by the watcher himself/herself, and is generally for individual use, but not for public use, which is unlikely to be used repeatedly. However, as for the public group, it generally includes many members, and the members all use the public group, and thus the public group is frequently used repeatedly. If the subscription is still initiated to the presence server by the resource list server through the above manner, the situation that many members in the same group subscribe for each other definitely occurs. For example, the public group includes N members, and each member places the public group into the resource list thereof, and thus the resource list server and the presence server need to establish all together N*(N-1) subscription relations. The resource list server is required to maintain (N-1) copies of the information of each member, which is a great challenge to the server performance and causes great resource wastes.

### SUMMARY OF THE INVENTION

An embodiment of the present invention provides a system for maintaining presence information of public group members, which is suitable for subscribing for information of the public group members and reducing the stress on a resource list server and a presence server in terms of performance and resource occupation.

Another embodiment of the present invention provides a presence group server, which is adapted to subscribe for information of public group members.

In still another embodiment of the present invention provides a method for maintaining presence information of public group members, which is suitable for subscribing for presence information of public group members.

An embodiment of the present invention provides a system for maintaining presence information of public group members, which includes a presence server and a group list management server, and further includes a presence group server.

The presence group server is connected to the presence server and the group list management server, and is adapted to obtain information of public group members from the group list management server according to a received subscription request for presence information of the public group members, subscribe for the presence information of the public group members from the presence server, and save the presence information.

An embodiment of the present invention further provides a presence group server, which includes a module for subscribing for/notifying presence information of group members, a module for subscribing for/notifying group members, and a module for subscribing for/notifying individual presence information.

The module for subscribing for/notifying presence information of group members is adapted to receive a subscription request for presence information of public group members, and return the presence information of the public group members to an initiator of the subscription request.

The module for subscribing for/notifying group members is adapted to obtain information of each public group member from the group list management server according to the subscription request.

The module for subscribing for/notifying individual presence information is adapted to obtain presence information of each public group member from the presence server according to the information of each public group member.

The presence information of each public group member obtained from the presence server is saved by any one of the module for subscribing for/notifying presence information of group members, the module for subscribing for/notifying group members, and the module for subscribing for/notifying individual presence information.

An embodiment of the present invention further provides a method for maintaining presence information of public group members, which includes steps of obtaining information of public group members, subscribing for presence information of the public group members according to the information of the public group members, and saving the presence information of the public group members.

In the embodiments of the present invention, the functions of the presence group server are made to be independent, and the number of message interfaces is correspondingly increased, so that the presence group server subscribes each public group member merely once, and saves the presence information of all the subscribed public group members. As a result, when another user subscribes for the presence information once again, the presence group server directly sends the presence information to the user, without extracting the presence information of the members from the presence server, thereby reducing the stress on the resource list server and the presence server in terms of the performance and resource occupation.

### BRIEF DESCRIPTION OF THE DRAWINGS

The present invention will become more fully understood from the detailed description given herein below for illustration only, and thus is not limitative of the present invention, and wherein:

FIG 1 is a networking structure diagram of a presence group service in the prior art;

FIG 2 is a system architecture diagram after functions of a presence group server are made to be logically independent according to one embodiment of the present invention;

FIG 3 is a structure diagram of a group presence service according to an embodiment of the present invention;

FIG 4 is a flow chart of a method for subscribing for presence information of public group members by a user equipment according to one embodiment of the present invention;

FIG 5 is a system architecture diagram for a user equipment to subscribe for presence information of public group members according to another embodiment of the present invention;

FIG 6 is a flow chart of a method for subscribing for presence information of public group members by the user equipment according to another embodiment of the present invention;

FIG 7 is a system architecture diagram for a user equipment to subscribe for presence information of public group members according to another embodiment of the present invention;

FIG 8 is a flow chart of a method for subscribing for presence information of public group members by the user equipment according to another embodiment of the present invention; and

FIG 9 is a system architecture diagram of a combined solution of the embodiments of the present invention referring to the FIG 5 to FIG 8.

### DETAILED DESCRIPTION OF THE EMBODIMENTS

In the embodiments of the present invention, the functions of the presence group server are made to be independent, and the number of message interfaces is correspondingly increased, so that the presence group server subscribes for each public group member merely once, and saves the presence information of all the subscribed public group members. As a result, when another member subscribes for the presence information once again, the presence group server directly sends the presence information to the user, without extracting the presence information of the members from the presence server, thereby reducing the stress on the resource list server and the presence server in terms of the performance and resource occupation.

FIG 2 is a system architecture diagram when functions of a presence group server are made to be logically independent. The functions of the presence group server can be integrally realized on the resource list server as one module, and can also be realized independently. After the functions of the presence group server are made to be independent, the networking architecture and functions are quite clear, and the internal logic is very simple. Meanwhile, the presence group server not only exposes an interface to a terminal, but also directly exposes an interface to other application servers. Furthermore, as the function division of the three basic servers for the presence service is clearly specified, the standardization is enhanced.

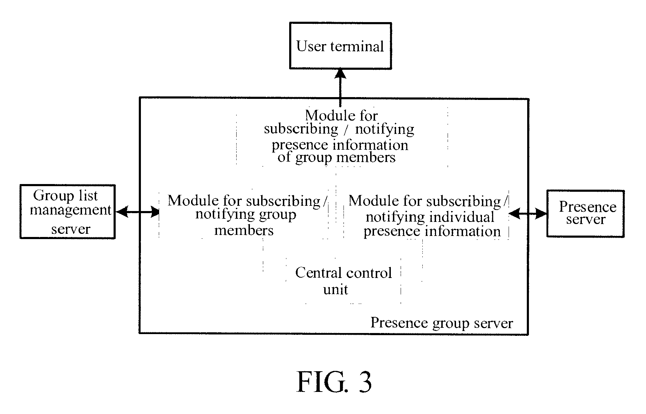

An inner structure and external connection relations of the presence group server are shown in FIG 3, and the presence group server includes a module for subscribing for/notifying presence information of group members, a central control unit, a module for subscribing for/notifying group members, and a functional module for subscribing for/notifying individual presence information.

The module for subscribing for/notifying presence information of group members is adapted to process an interaction between a user equipment and the presence group server, in which the user equipment subscribes for the group presence information from the module, and the module informs the user equipment of the group presence information after the presence group server processes the subscription request.

The central control unit is adapted to control normal operations of the other modules in the presence group server, including, for example, controlling subscribing and notifying functions of the group presence information, controlling the subscribing function for the information of the group members, and controlling the subscribing function for the presence information of each individual group member.

The module for subscribing for/notifying group members is adapted to subscribe for information of each group member from the group list management server, and process messages sent by the group list management server.

The functional module for subscribing for/notifying individual presence information is adapted to initiate a subscription request for presence information of each individual member to the presence server, and process messages sent by the presence server.

Furthermore, the central control unit is adapted to save subscription relations to the group presence information, a group member list, and the presence information of each group member, and so on. Similarly, such saving function may be realized by being dispersed into several modules.

[One Proposed Embodiment]

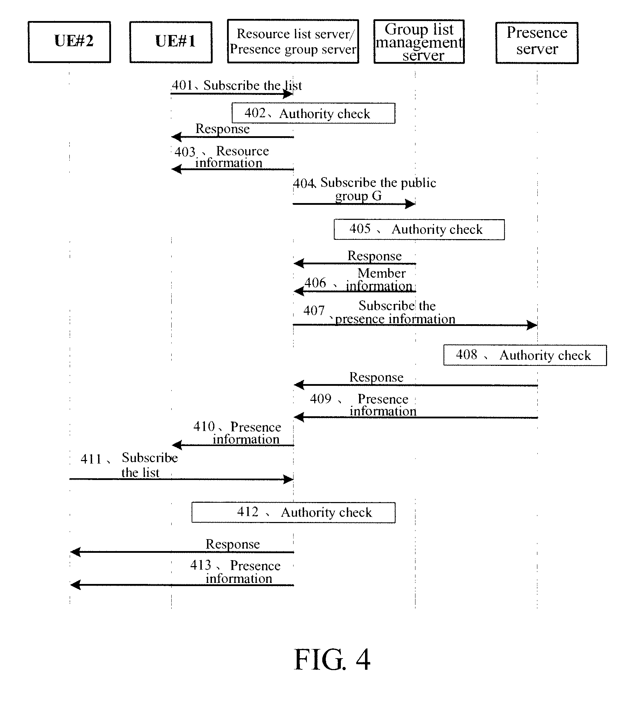

In this embodiment, the functions of the presence group server are logically separated from the resource list server, and the architecture diagram thereof after the separation is as shown in FIG 2. A flow chart for subscribing for presence information of public group members by user equipment through the system is as shown in FIG 4, which includes the following detailed steps.

In Step 401, a UE#1 subscribes for a resource list of itself. In order to simplify the descriptions, it is assumed that the resource list merely includes presence information of members in one public group G

In Step 402, a resource list server checks an authority of the subscription request from the UE#1, and returns a response to the UE#1.

In Step 403, the resource list server informs the UE#1 of resource information in the rls-services document, in which the resource information includes uniform resource identifiers (URI) of members, a private group, and a public group in a resource list.

In Step 404, the resource list server subscribes for information of members in the public group from a group list management server.

In Step 405, the group list management server checks an authority of the subscription request from the resource list server, and returns a response to the resource list server.

In Step 406, the group list management server sends the information of the members in the public group G to the resource list server, in which it is assumed that the public group G includes a member A and a member B.

In Step 407, the resource list server subscribes for presence information of the members A and B from a presence server.

In Step 408, the presence server checks an authority of the subscription request for presence information of members A and B and returns a response.

In Step 409, the presence server sends the presence information of the members A and B to the resource list server.

In Step 410, the resource list server saves the presence information of the members A and B, and sends the presence information of the members A and B to the UE#1.

The flow for the user equipment to subscribe for the presence information of the members in the public group G for the first time has been described above. If another user equipment subscribes for the presence information of the members in the public group, the following steps are executed.

In Step 411, a UE#2 subscribes for a resource list of itself, and the resource list merely includes presence information of members in one public group G

In Step 412, the resource list server checks an authority of the subscription request from UE#2, and returns a response.

In Step 413, as the resource list server has saved the presence information of the members A and B in the public group G, the resource list server directly sends the existing presence information to the UE#2. The resource list server may determine that it has saved the presence information of the members in the public group according to the URI of the public group G cited in the resource list, so it does not need to initiate a subscription request to the group list management server once again.

[Another Proposed Embodiment]

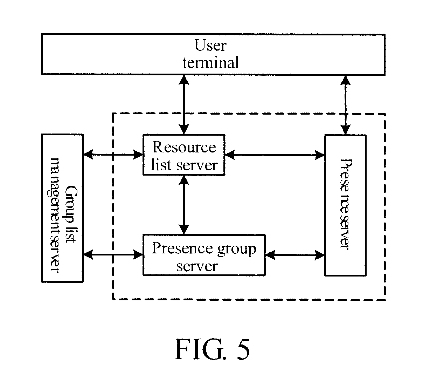

FIG 5 is a system architecture diagram for a user equipment to subscribe for presence information of public group members according to another embodiment of the present invention, which includes a user equipment, a presence server, a resource list server, and a group list management server, and further includes a presence group server.

The presence group server is connected to the presence server, the resource list server, and the group list management server, and is adapted to obtain information of public group members, subscribe for presence information of all the public group members, and save the presence information.

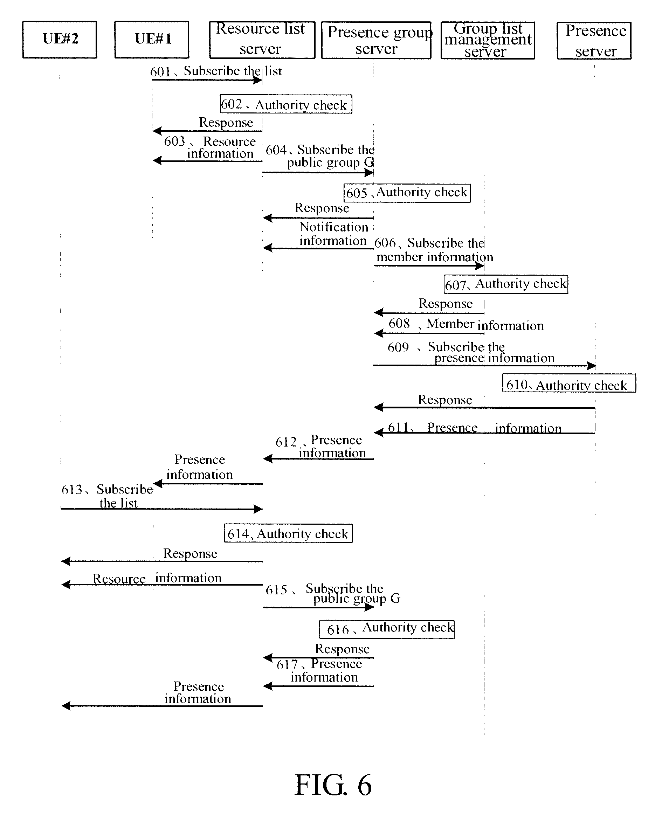

FIG 6 is a flow chart of a method for subscribing for presence information of public group members by the user equipment according to another embodiment of the present invention. The method includes the following steps.

In Step 601, a user equipment UE#1 subscribes for a resource list which the UE#1 needs, and sends a subscription request to the resource list server. In order to simplify the descriptions, it is assumed that the resource list merely includes one public group G

In Step 602, the resource list server checks an authority of the subscription request from the UE#1 , and returns a response to the UE#1.

In Step 603, the resource list server sends resource information in the rls-services document to the UE#1, in which the resource information includes URIs of an entry, a private group, and a public group in the resource list.

In Step 604, the resource list server finds that the resource list includes the public group G, and then initiates a subscription request for the public group to the presence group server. The presence group server confirms the public group according to the URI of the public group G cited in the resource list, that's because distinct different identifiers are used in the URI of the public group and that of the private group.

In Step 605, the presence group server checks an authority of the subscription request for the public group G, sends a response to the resource list server, and sends a notification message to the resource list server.

In Step 606, the presence group server subscribes for information of members in the public group G from the group list management server.

In Step 607, the group list management server checks an authority of the subscription request from the presence group server, and returns a response to the presence group server.

In Step 608, the group list management server sends the information of the members in the public group G to the presence group server. If it is assumed that G includes a member A and a member B, the member information includes URIs of A and B.

In Step 609, the presence group server subscribes for presence information of the members A and B from the presence server.

In Step 610, the presence server checks an authority of the subscription request for presence information of the members A and B and returns a response to the presence group server.

In Step 611, the presence server sends the presence information of the members A and B to the presence group server.

In Step 612, the presence group server saves the presence information of the members A and B, and sends the presence information of the members A and B to the UE#1 via the resource list server.

The flow for the user equipment to subscribe for the presence information of the members in the public group G for the first time has been described above. If another user equipment subscribes for the presence information of the members in the public group, the following steps are executed.

In Step 613, a UE#2 subscribes for a resource list which the UE#2 needs, and initiates a subscription request to the resource list server, in which the resource list also merely includes the public group G

In Step 614, the resource list server checks an authority of the subscription request from the UE#2, returns a response to the UE#2, and sends resource information in the resource list to the UE#2, in which the resource information includes URIs of an entry, a private group, and a public group in the resource list.

In Step 615, the resource list server initiates a subscription request for the public group G to the presence group server.

In Step 616, the presence group server checks an authority of the subscription request send by the resource list server in step 615, and sends a response to the resource list server.

In Step 617, as the presence group server has saved the information of the members in the public group G and the presence information thereof, the presence group server directly sends the presence information of the members A and B to the UE#2 via the resource list server.

[Another Proposed Embodiment]

In this embodiment, the presence group server is configured as one individual server, which can directly expose an interface to a terminal. Accordingly, the terminal may directly subscribe for presence information of members in a public group to the presence group server, without adding the public group into the resource list for subscription, thereby simplifying the signaling flow.

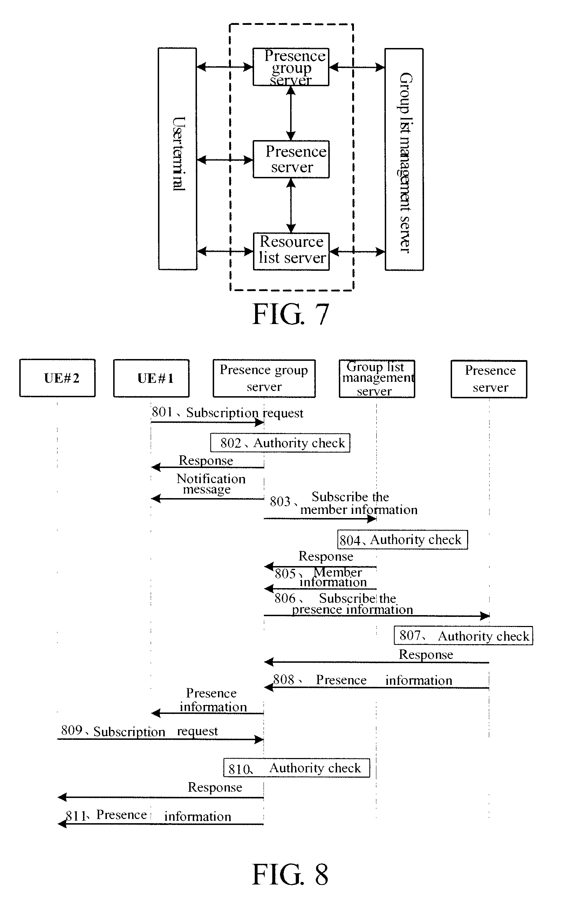

FIG. 7 is a system architecture diagram for a user equipment to subscribe for presence information of public group members according to another embodiment of the present invention. In the system, the presence group server is directly connected to a user equipment and is adapted to directly receive a subscription request for presence information of public group members from the user equipment.

FIG. 8 is a flow chart of a method for subscribing for presence information of public group members by the user equipment according to another embodiment of the present invention. The method includes the following steps.

In Step 801, a UE#1 directly subscribes for presence information of members in the public group G from the presence group server.

In Step 802, the presence group server checks an authority of the subscription request from the UE#1 , returns a response to the UE#1, and sends a notification message to the UE#1.

In Step 803, the presence group server subscribes for the information of the members in the public group G from the group list management server.

In Step 804, the group list management server checks an authority of the subscription request from the presence group server, and returns a response to the presence group server.

In Step 805, the group list management server sends the information of the members in the public group G to the presence group server. Herein, it is assumed that the public group G includes a member A and a member B.

In Step 806, the presence group server subscribes for the presence information of the members A and B from the presence server.

In Step 807, the presence server checks an authority of the subscription request for the presence information of the members A and B and returns a response to the presence group server.

In Step 808, the presence server sends the presence information of the members A and B to the UE#1 via the presence group server, and the presence group server saves the presence information.

The flow for the user equipment to subscribe for the presence information of the members in the public group G for the first time has been described above. If another user equipment subscribes for the presence information of the members in the public group, the following steps are executed.

In Step 809, a UE#2 directly subscribes for presence information of members in the public group G from the presence group server.

In Step 810, the presence group server checks an authority of the subscription request from theUE#2, and returns a response to the UE#2.

In Step 811, the presence group server directly sends the saved presence information of the members in the public group G to the UE#2.

In this embodiment, the presence group server is configured as one individual server and directly exposes an interface to the terminal, and thus the flexibility for subscribing the public group by the terminal user is enhanced, and the public group can be added into the resource list for subscription, and can also be subscribed individually, thereby improving the user's experience.

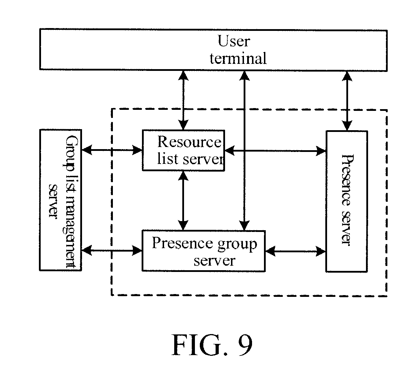

FIG 9 is a system architecture diagram of a combined solution of the embodiments of the present invention referring to the FIG 5 to FIG 8. Through this system, the presence group server is configured as one independent server, and meanwhile exposes an interface to a terminal and the resource list server.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A system for maintaining presence information of public group members, **characterized by** comprising a presence server and a group list management server, and further comprising:
a presence group server, connected to the presence server and the group list management server, adapted to obtain information of the public group members from the group list management server according to a received subscription request for the presence information of the public group members, subscribe for the presence information of the public group members from the presence server, and save the presence information of the public group members.

2. The system for maintaining presence information of public group members according to claim 1, wherein the presence group server is further connected to a terminal and adapted to receive a subscription request for presence information of public group members from the terminal.

3. The system for maintaining presence information of public group members according to claim 1, wherein the presence group server is further connected to a resource list server or embedded in the resource list server and adapted to receive a subscription request for presence information of public group members from the resource list server.

4. The system for maintaining presence information of public group members according to any one of claims 1, 2, or 3, wherein
the presence group server is further adapted to directly return the saved presence information of the public group members to an initiator of another subscription request for the presence information of the public group members, upon receiving the another subscription request for the presence information of the public group members.

5. A presence group server, **characterized by** comprising:
a module for subscribing for/notifying presence information of group members, adapted to receive a subscription request for presence information of public group members, and return the presence information of the public group members to an initiator of the subscription request;
a module for subscribing for/notifying group members, adapted to obtain information of the public group members from a group list management server according to the subscription request;
a module for subscribing for/notifying individual presence information, adapted to obtain presence information of each public group member from a presence server according to the information of the public group members, wherein
the presence information of each public group member obtained from the presence server is saved by any one of the module for subscribing for/notifying presence information of group members, the module for subscribing for/notifying group members list, and the module for subscribing for/notifying individual presence information.

6. The presence group server according to claim 5, wherein
the module for subscribing for/notifying presence information of group members is further adapted to directly return a saved presence information of the public group members to an initiator of another subscription request for presence information of the public group members, upon receiving the another subscription request for the presence information of the public group members.

7. The presence group server according to claim 5 or 6, further comprising a central processing unit (CPU), wherein
the CPU is adapted to control overall operations of the module for subscribing/notifying presence information of group members, the module for subscribing/notifying group members, and the module for subscribing/notifying individual presence information, and save subscription relation of presence information of the public group members, a public group member list, and presence information of each public group member.

8. A method for maintaining presence information of public group members, **characterized by** comprising:
obtaining information of public group members, subscribing for presence information of the public group members according to the information of the public group members, and saving the presence information of the public group members.

9. The method for maintaining presence information of public group members according to claim 8, further comprising:
directly returning the saved presence information of the public group members to an initiator of another subscription request for presence information of the public group members, upon receiving the another subscription request for the presence information of the public group members.

10. The method for maintaining presence information of public group members according to claim 8, comprising:
receiving, by a resource list server, a subscription request for presence information of public group members from a terminal, and obtaining information of the public group members from a group list management server according to the subscription request; and
subscribing, by the resource list server, for presence information of the public group members from a presence server according to the information of the public group members, and saving the presence information of the public group members in the resource list server.

11. The method for maintaining presence information of public group members according to claim 10, further comprising:
directly returning, by the resource list server, the saved presence information of the public group members to an initiator of another subscription request for presence information of the public group members, upon receiving the another subscription request for the presence information of the public group members by the resource list server.

12. The method for maintaining presence information of public group members according to claim 8, comprising:
receiving, by a presence group server, a subscription request for presence information of public group members from a resource list server, which received from a terminal; and
obtaining, by the presence group server, the information of the public group members from a group list management server, subscribing forthe presence information of the public group members from a presence server according to the information of the public group members, and saving the presence information of public group members in the presence group server.

13. The method for maintaining presence information of public group members according to claim 12, further comprising:
directly returning, by the presence group server, the saved presence information of the public group members to an initiator of another subscription request for presence information of the public group members, upon receiving the another subscription request for the presence information of the public group members by the presence group server.

14. The method for maintaining presence information of public group members according to claim 8, comprising:
receiving, by a presence group server, a subscription request for presence information of public group members from a terminal, and obtaining information of the public group members from a group list management server according to the subscription request; and
subscribing, by the presence group server, for presence information of the public group members from a presence server according to the information of the public group members, and saving the presence information of the public group members in the presence group server.

15. The method for maintaining presence information of public group members according to claim 14, further comprising:
directly returning, by the presence group server, the saved presence information of the public group members to an initiator of another subscription request for presence information of the public group members, upon receiving the another subscription request for the presence information of the public group members by the presence group server.

16. The method for maintaining presence information of public group members according to claim 15, wherein the another subscription request is initiated by a terminal or a resource list server.
